# EUROPÄISCHE PATENTSCHRIFT

(11) **EP 2 901 537 B1**
(45) Veröffentlichungstag und Bekanntmachung des Hinweises auf die Patenterteilung: **23.01.2019**
(21) Anmeldenummer: 12801475.0
(22) Anmeldetag: 19.11.2012
(51) Int. Cl.: H02M 5/10, H02J 3/36

(54) **UMSPANNVORRICHTUNG**
TRANSFORMATION APPARATUS
DISPOSITIF DE TRANSFORMATION

(43) Veröffentlichungstag der Anmeldung: 05.08.2015
(73) Patentinhaber: Siemens Aktiengesellschaft, 80333 München (DE)
(72) Erfinder: GAUDENZ, Markus Matthias, 91056 Erlangen (DE); SCHMITZ, Thomas, 91052 Erlangen (DE)
(86) Internationale Anmeldenummer: PCT/EP2012/072981
(87) Internationale Veröffentlichungsnummer: WO 2014/075740

(56) Entgegenhaltungen:
- EP-A1- 2 463 978
- DE-C- 617 351
- US-A- 4 133 026
- US-A- 4 308 575

## Beschreibung

Die Erfindung betrifft eine Vorrichtung zum Anschluss eines Umrichters an ein Wechselspannungsnetz mit einem Netzanschluss zum Verbinden mit dem Wechselspannungsnetz und einem Umrichteranschluss zum Verbinden mit dem Umrichter, wobei der Netz- und der Umrichteranschluss über wenigstens zwei parallel zueinander geschaltete Transformatoren miteinander verbindbar sind, die neben einer Primär- und Sekundärwicklung mit einer Tertiärwicklung ausgestattet sind, wobei in Reihe zu jedem Transformator wenigstens ein Schalter angeordnet ist und wobei eine Zuschalteinheit vorgesehen ist, die an eine Tertiärwicklung eines der Transformatoren angeschlossen ist.

Die Erfindung betrifft ferner eine Hochspannungsanlage sowie ein Verfahren zum Zuschalten eines nichtmagnetisierten oder bereits vormagnetisierten zweiten Transformators.

Aus der Patentschrift US 4,133,026 A ist eine Anordnung zum Starten einer Hochspannungs-Gleichstrom-Station bekannt. Dabei sind an zwei Dreiwicklungstransformatoren an deren Tertiärwicklung jeweils ein Notstrom-Dieselaggregat und eine Blindleistungsquelle angeschlossen, um jeweils Wirk- bzw. Blindleistung in die Dreiwicklungstransformatoren einzuspeisen.

Die Patentschrift DE 617 351 C offenbart eine Anordnung mit zwei Hochspannungsfernleitungen, die jeweils zwei Dreiwicklungstransformatoren aufweisen und über die Tertiärwicklungen dieser Dreiwicklungstransformatoren elektrisch miteinander gekoppelt sind.

Aus der europäischen Patentanmeldung EP 2 463 978 A1 ist eine Anordnung mit zwei Gasturbinen bekannt, die zwei Generatoren antreiben. Die beiden Generatoren speisen die erzeugte elektrische Energie jeweils über eine eigene Wechselspannungsleitung in ein eigenes Wechselstromnetz ein. Zur Optimierung des Leistungsfaktors sind die beiden Wechselspannungsleitungen mittels mindestens eines Umrichters miteinander gekoppelt. Der Umrichter dient auch dazu, beim Start der Gasturbine den zugehörigen Generator mit elektrischer Energie zu versorgen, um diesen als einen Motor zu betreiben.

Aus dem Patent US 4,308,575 A ist eine Hochspannungsgleichstrom-Übertragungsanlage bekannt, bei der die Tertiärwicklungen zweier Dreiwicklungstransformatoren miteinander und mit einem Dämpfungsfilter zur Unterdrückung von Oberwellen verbunden sind.

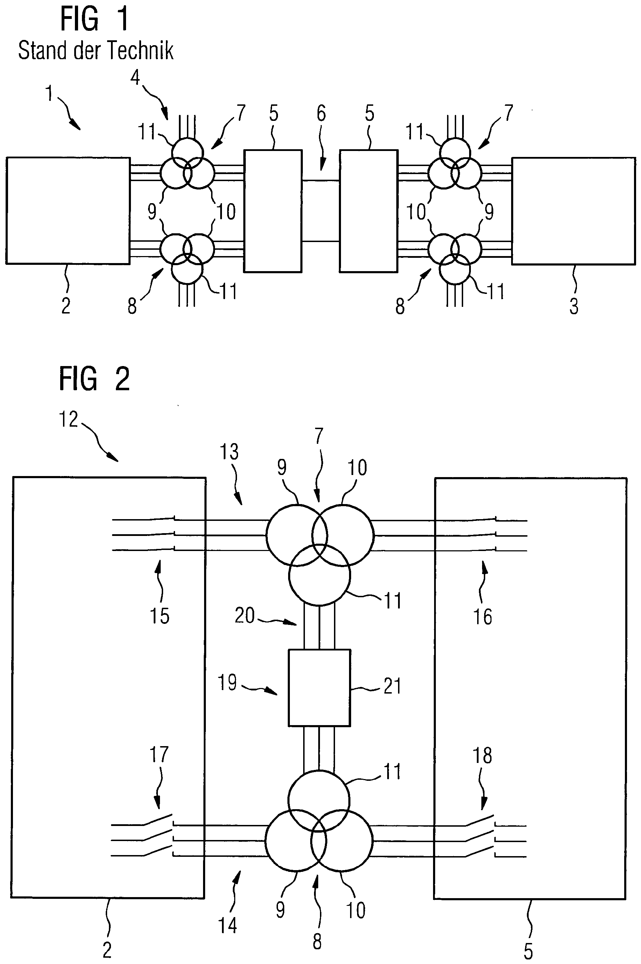

Eine Vorrichtung und eine Hochspannungsanlage sowie ein Verfahren der eingangs genannten Art sind aus der Praxis im Bereich der Hochspannungsgleichstromübertragung bereits bekannt. In Figur 1 ist eine typische vorbekannte Hochspannungsgleichstromübertragungs-(HGÜ-) Anlage 1 schematisch verdeutlicht. Die gezeigte HGÜ-Anlage 1 dient zur Übertragung elektrischer Leistung zwischen einem ersten Wechselspannungsnetz 2 und einem zweiten Wechselspannungsnetz 3. Dabei ist jedes Wechselspannungsnetz 2, 3 über eine gattungsgemäße Vorrichtung 4 mit einem figürlich nicht dargestellten Wechselspannungsanschluss eines Umrichters 5 verbunden. Zur Leistungsübertragung wird Wechselspannung von einem Umrichter 5 in Gleichspannung umgewandelt und an den anderen Umrichter 5 über ein Gleichspannungsnetz 6 übertragen. Die Vorrichtung 4 dient zum Anschluss des jeweiligen Umrichters 5 an das ihm zugeordnete Wechselspannungsnetz 2 beziehungsweise 3 und verfügt über zwei einander parallel geschaltete Transformatoren 7, 8. Dabei ist jeder Transformator 7, 8 mit einer Primärwicklung 9, eine Sekundärwicklung 10 sowie einer Tertiärwicklung 11 ausgerüstet. Die Primärwicklung 9 ist galvanisch mit einem nicht figürlich dargestellten Netzanschluss
und die Sekundärwicklung 10 mit einem figürlich ebenfalls nicht dargestellten Umrichteranschluss verbunden. Die Tertiärwicklung 11 dient zur Entnahme elektrischer Leistung für den Eigenbedarf der HGÜ-Anlage 1, also beispielsweise zur Bereitstellung von Licht, Heizenergie, der Energieversorgung von Steuerungsgeräten und dergleichen. Zur Leistungsübertragung zwischen Umrichter 5 und Wechselspannungsnetz wäre grundsätzlich ein Transformator 7, 8 ausreichend. Aus Sicherheitsgründen ist jedoch ein zweiter parallel angeordneter Transformatoren 7, 8 vorgesehen, um einen Ausfall des ersten Transformators 7 auffangen zu können. Der Energiefluss im Normalbetrieb erfolgt über beide parallel geschaltete Transformatoren 7, 8. Beim Anfahren der HGÜ-Anlage 1 wird nur der erste Transformator 7 mit dem Umrichter 5 verbunden. Dieser erste Transformator 7 kann daher sanft zugeschaltet werden, indem im Zuge des Starts der HGÜ-Anlage 1 die Spannungen an der Wechselspannungsseite des Umrichters 5 langsam erhöht wird. Insbesondere bei dem Einsatz der HGÜ-Anlage 1 zum Anschluss seeseitiger Windparks wird zunächst die Primärwicklung 9 mit dem Wechselspannungsnetz 2 sowie die Sekundärwicklung 10 mit dem Umrichter 5 verbunden. Anschließend wird die vom Umrichter 5 wechselspannungsseitig erzeugte Spannung rampenartig erhöht, wobei der Transformator 7 langsam magnetisiert und gleichzeitig mit der Wechselspannung des Wechselspannungsnetzes 2 synchronisiert wird. Der zweite parallele Transformator 8 kann bei diesem Startvorgang bereits ebenfalls schon mit dem Umrichter verbunden sein. Auch ist ein Startvorgang nur mit dem ersten Transformator 7 realisierbar. Dies ist beispielsweise dann der Fall, wenn Wartungsarbeiten am parallelen Transformator 8 durchgeführt werden. Zum Isolieren der Transformatoren 7, 8 dienen in Figur 1 figürlich nicht dargestellte Schalter.

Das Zuschalten des zweiten Transformators 8 bei laufendem Betrieb kann sich störend auf das angeschlossene Wechselspannungsnetz 2 auswirken, da hier teilweise nur geringe Kurzschlussleistungen vorhanden sind. Dies ist insbesondere bei der bereits erwähnten Anbindung von seeseitigen Windparks der Fall, da die Windparks zusammen mit dem Umrichter ein nur schwaches Wechselspannungsnetz 2 bereitstellen.

Beim Zuschalten des zweiten Transformators 8 können derart hohe Ströme fließen, dass die Spannung in einem schwachen Wechselspannungsnetz 2 einbricht und unter eine zulässige Gesamtspannungsgrenze fällt. Darüber hinaus können Verzerrungen in Form von harmonischen Oberschwingungen der Grundfrequenz im Wechselspannungsnetz 2 auftreten. Auch eine Überlastung oder Beschädigung des Umrichters durch zu hohe Ströme ist nicht auszuschließen und bei einem schwachen Wechselspannungsnetzes wie beispielsweise einem Inselnetz sogar wahrscheinlich. Auch Standardlösungen der Energietechnik, wie beispielsweise das phasenselektiv gesteuerte Zuschalten der Primär- oder Sekundärwicklung können nicht in jedem Fall sicherstellen, dass es nicht zu den beschriebenen Störungen im Netz (Netzverzerrungen) kommt.

Der zweite Transformator muss insbesondere dann zugeschaltet werden, wenn dieser zuvor zu Wartungszwecken abgeschaltet wurde. Für einen wirtschaftlichen Betrieb muss die Wartung der Anlage möglich sein, ohne dass die Energieübertragung des Systems unterbrochen wird. Auch aus diesem Grund verfügt das System über mindestens zwei parallele Transformatoren. Die Übertragung der elektrischen Leistung kann dann über den Transformator erfolgen, der dem abgeschalteten Transformator parallel geschaltet ist.

Es ist aus der Praxis bekannt, vor dem Zuschalten des zweiten Transformators 8, diesen über seine Tertiärwicklung 11 mit einem Dieselgenerator, der eine variable Spannungshöhe generieren kann, zu verbinden. Mit Hilfe des Dieselgenerators kann der zweite Transformator 8 somit magnetisiert werden. Zur Synchronisierung mit der Wechselspannung im Wechselspannungsnetz 2 dienen Synchronisierungsmittel. Nach seiner Magnetisierung und Synchronisierung mit dem Wechselspannungsnetz kann der zweite Transformator 8 sanft zugeschaltet werden. Der vorbekannten Vorrichtung und dem vorbekannten Verfahren haftet der Nachteil an, dass die Synchronisierung zusätzliche Komponenten erfordert. Darüber hinaus muss Treibstoff für den Dieselgenerator zur Verfügung gestellt werden. Insbesondere auf Hochseeplattformen ist jedoch der Vorrat an Treibstoff begrenzt. Auch das Betanken einer solchen Plattform ist nicht trivial. Für zukünftige Plattformen, insbesondere für die in der Nordsee, wird derzeit diskutiert, auf Dieselaggregate zu verzichten.

Aufgabe der Erfindung ist es daher, eine Vorrichtung, eine Hochspannungsanlage und ein Verfahren der eingangs genannten Art bereitzustellen, die kostengünstig, einfach und zuverlässig sind.

Diese Aufgabe wird gelöst durch eine Vorrichtung und durch ein Verfahren gemäß den unabhängigen Patentansprüchen.

Die Erfindung löst diese Aufgabe ausgehend von der eingangs genannten Vorrichtung dadurch, dass die Zuschalteinheit auch an die Tertiärwicklung des anderen Transformators angeschlossen und zum Verbinden der Tertiärwicklungen miteinander eingerichtet ist.

Die erfindungsgemäße Hochspannungsanlage verfügt über einen Umrichter, der einen Gleich- und einen Wechselspannungsanschluss aufweist, wobei der Wechselspannungsanschluss mit einer oben beschriebenen erfindungsgemäßen Vorrichtung verbunden ist.

Die Aufgabe wird auch durch ein Verfahren zum Zuschalten eines nicht magnetisierten zweiten Transformators in Parallelschaltung zu einem sich in Betrieb befindlichen magnetisierten ersten Transformator gelöst, der mit einem Wechselspannungsnetz und dem Wechselspannungsanschluss eines Umrichters verbunden ist, wobei jeder Transformator neben einer Primär- und einer Sekundärwicklung auch eine weitere Wicklung (Tertiärwicklung) aufweist. Gemäß dem erfindungsgemäßen Verfahren wird die Tertiärwicklung des zweiten Transformators mit der Tertiärwicklung des ersten Transformators verbunden und der zweite Transformator erst anschließend an das Wechselspannungsnetz angeschlossen wird.

Die Erfindung basiert auf der Idee, dass zum sanften Zuschalten des zweiten Transformators die beiden Tertiärwicklungen der redundanten Transformatoren vor dem Zuschalten miteinander gekoppelt werden, um den zweiten Transformator zu magnetisieren und synchronisieren. Erfindungsgemäß ist daher eine Zuschalteinheit bereitgestellt, die mit beiden Tertiärwicklungen der parallel geschalteten Transformatoren verbindbar ist. Da sich der erste Transformator bereits im Betrieb befindet, stellt dieser die zur Magnetisierung und Synchronisierung des zweiten Transformators notwenige Energie bereit. Die Energie wird über die Zuschalteinheit in den zweiten Transformator eingespeist. Ist der zweite Transformator ausreichend magnetisiert und synchronisiert, kann dieser mit dem Wechselspannungsnetz verbunden werden, ohne dass hohe Einschaltströme fließen, die für Verzerrungen im Wechselspannungsnetz führen oder aber auch eine Abschaltung des Umrichters durch dessen Schutzeinrichtung bewirken könnten. Da die Tertiärwicklungen der Transformatoren ohnehin vorhanden sind, sind die erfindungsgemäße Vorrichtung und sind das erfindungsgemäße Verfahren kostengünstig und gleichzeitig zuverlässig. Dies gilt natürlich auch für die erfindungsgemäße Hochspannungsanlage.

Vorteilhafterweise weist die Zuschalteinheit einen sich zwischen den Tertiärwicklungen erstreckenden Verbindungszweig auf, in dem wenigstens ein Schalter angeordnet ist. Der in dem Verbindungszweig angeordnete Schalter befindet sich im Normalbetrieb, in dem lediglich einer der parallelen Transformatoren mit dem Wechselspannungsnetz und dem Umrichter verbunden ist, in seiner geöffneten Stellung. Vor dem Zuschalten des zweiten Transformators wird der Schalter des Verbindungszweiges geschlossen. Somit sind die Tertiärwicklungen der parallel geschalteten Transformatoren galvanisch miteinander verbunden. Es kommt zur Magnetisierung des Joches des zweiten Transformators sowie gleichzeitig zur Synchronisierung mit dem Wechselspannungsnetz, das bereits mit dem ersten Transformator verbunden ist. Beim Zuschalten des zweiten Transformators sind hohe Einschaltströme vermieden, da der Transformator bereits magnetisiert und synchronisiert ist. Darüber hinaus kann ein oftmals verwendeter Stufensteller (Tap-changer) die Anpassung der Spannungsniveaus weiter optimieren. Nach dem Verbinden des zweiten Transformators mit dem Wechselspannungsnetz und dem Umrichter kann die Verbindung zwischen den Tertiärwicklungen durch Öffnen des in dem Verbindungszweig angeordneten Schalters wieder unterbrochen werden.

Grundsätzlich kann der Schalter ein beliebiger Schalter, also auch ein elektronischer Schalter sein, bei dem Leistungshalbleiter zum Einsatz gelangen.

Gemäß einer bevorzugten Ausgestaltung ist der Schalter jedoch ein mechanischer Schalter. Mechanische Schalter sind kostengünstig am Markt erhältlich und im Bereich der Hochspannungstechnik weitverbreitet. Ist der Schalter geschlossen, sorgen die Induktivitäten oder mit anderen Worten der Wechselspannungswiderstand der Tertiärwicklungen dafür, dass keine zu hohen Einschaltströme zwischen den Tertiärwicklungen fließen. Hierbei hat es sich als zweckmäßig erwiesen, dass das Übersetzungsverhältnis zwischen Primär- und Tertiärwicklung des ersten und zweiten Transformators im Bereich von 10 liegt, wobei die Primärwicklung mit dem Wechselspannungsnetz verbunden ist. Beispielsweise liegt die im Wechselspannungsnetz vorherrschende Wechselspannung im Bereich von 100-200 kV, wohingegen die an der Klemmen der Tertiärwicklung bereitgestellte Spannung im Bereich von 10 bis 20 kV, also im Mittelspannungsbereich, liegt. Die am Wechselspannungsanschluss des Umrichters liegende Spannung liegt beispielsweise im Bereich von 100 bis 500 kV.

Vorteilhafterweise ist in Reihe zum Schalter wenigstens ein Widerstand angeordnet. Der Widerstand reduziert die Amplitude der Einschaltströme, die beim Verbinden der Tertiärwicklungen entstehen, noch weiter. Auf diese Art und Weise kann die Magnetisierung und Synchronisierung des zweiten Transformators noch sanfter erfolgen.

Zweckmäßigerweise ist der Widerstand ein nichtlinearer Widerstand. Ein nichtlinearer Widerstand ist beispielsweise ein so genannter Heißleiter mit einem negativen Temperaturkoeffizienten. So weisen Heißleiter im erhaltenen Zustand einen höheren Widerstand auf als im erwärmten Zustand. Beim Verbinden der Tertiärwicklungen ist daher durch den Heißleiter ein hoher Widerstand bereitgestellt. Die beim Magnetisieren des zweiten Transformators auftretenden Ströme erwärmen den Heißleiter jedoch, so dass sich sein Widerstand verringert.

Anstelle oder zusätzlich zu Heißleitern können Varistoren als nichtlinearer Widerstand eingesetzt werden. Varistoren blockieren den Stromfluss, bis die über sie abfallende Spannung einen Schwellenwert überschreitet. Anschließend verhalten sich die Varistoren wie ein ohmscher Widerstand.

Zweckmäßigerweise verfügt die Zuschalteinheit über ein induktives Element. Induktive Elemente stellen für eine Wechselspannung oder einen Wechselstrom einen Wechselwiderstand bereit, so dass das induktive Element ebenfalls strombegrenzend wirkt und somit für ein sanftes Zuschalten des zweiten Transformators sorgt.

Gemäß einer Weiterentwicklung weist die Zuschalteinheit wenigstens einen Leistungshalbleiterschalter auf. Der Leistungshalbleiterschalter ist beispielsweise der bereits erwähnte Schalter, der dreipolig ausgebildet und zwischen den Tertiärwicklungen angeordnet ist. Der Leistungshalbleiterschalter kann jedoch auch Teil eines Umrichters sein. Der Umrichter kann entweder in einem die Tertiärwicklungen miteinander verbindenden Verbindungszweig angeordnet oder aber auch parallel zu dem besagten Verbindungszweig geschaltet sein. Ist der Umrichter parallel zum Verbindungszweig geschaltet, ist dieser zweckmäßigerweise mit Energiespeichern verbunden, die beispielsweise durch so genannten "Super Caps" realisiert sind. Die Super Caps stellen die zum sanften Zuschalten des Transformators notwendige Magnetisierungs- und Synchronisierungsenergie bereit. Sie können ebenfalls mittels des Umrichters über die Tertiärwicklung des jeweiligen Transformators mit Energie versorgt und somit aufgeladen werden.

Zweckmäßigerweise sind zwischen dem Netzanschluss und jedem Transformator Netzschalter und zwischen dem Umrichteranschluss und jedem Transformator Umrichterschalter angeordnet. Sind zwei Transformatoren vorgesehen, ist ein erster Netzschalter zwischen dem ersten Transformator und dem Netzanschluss und ein zweiter Netzschalter zwischen dem zweiten Transformator und dem Netzanschluss angeordnet. Entsprechendes gilt für die Umrichterschalter. Netz- und Umrichterschalter ermöglichen es, jeden Transformator vom Netz beziehungsweise vom Umrichter zu trennen.

Gemäß einer diesbezüglich zweckmäßigen Weiterentwicklung verfügt die Zuschalteinheit über Mittel zum phasenselektiven Schalten. Das phasenselektive Schalten ist aus dem Stand der Technik bereits bekannt, so dass an dieser Stelle hierauf nicht detailliert eingegangen zu werden braucht.

Gemäß einer zweckmäßigen Weiterentwicklung des erfindungsgemäßen Verfahrens wird vor dem Zuschalten des zweiten Transformators Blindleistung über die Tertiärwicklung in den zweiten Transformator eingeleitet. Eine solche Blindleistung kann beispielsweise mittels eines Umrichters erzeugt werden, der in Parallelschaltung zu einem Verbindungszweig angeordnet ist, der sich zwischen den Tertiärwicklungen erstreckt. Auf diese Ausgestaltung der erfindungsgemäßen Vorrichtung wurde bereits eingegangen.

Zweckmäßigerweise erfolgt die Verbindung der Tertiärwicklungen und/oder das Verbinden des zweiten Transformators mit dem Wechselspannungsnetz phasenselektiv.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleichwirkende Bauteile mit gleichen Bezugszeichen versehen sind und wobei
- Figur 1: eine aus dem Stand der Technik bekannte Hochspannungsgleichstromübertragungsanlage,
- Figur 2: ein Ausführungsbeispiel der erfindungsgemäßen Vorrichtung und
- Figur 3: ein weiteres Ausführungsbeispiel der erfindungsgemäßen Vorrichtung zeigen.

Figur 1 wurde bereits weiter oben ausführlich beschrieben und zeigt eine aus dem Stand der Technik bekannte Hochspannungsgleichstromübertragungs-(HGÜ-) Anlage.

Figur 2 zeigt ein Ausführungsbeispiel der erfindungsgemäßen Vorrichtung 12, die zwischen einem Wechselspannungsnetz 2 und einem Umrichter 5 angeordnet ist. Die Vorrichtung 12 umfasst einen ersten Transformator 7 sowie einen zweiten Transformator 8, wobei jeder Transformator 7, 8 eine Primärwicklung 9, eine Sekundärwicklung 10 sowie eine Tertiärwicklung 11 aufweist. Der erste Transformator 7 ist in einem ersten Verbindungszweig 13 angeordnet und der zweite Transformator 8 in einem zweiten Verbindungszweig 14. Die Verbindungszweige 13 und 14 erstrecken sich in Parallelschaltung zwischen einem figürlich nicht dargestellten Netzanschluss und einem figürlich nicht dargestellten Umricheranschluss der Vorrichtung 12. Der Netzanschluss kann beliebig ausgestaltet sein. Beispielsweise handelt es sich um eine einfache Sammelschiene, die ihrerseits wieder über eine Schalteinheit mit dem Wechselspannungsnetz 2 verbunden ist. Der Netzanschluss kann jedoch auch eine komplexe Schaltanlage sein. Einer oder mehrere dieser Schalter kann im Rahmen der Erfindung Teil einer Zuschalteinheit sein, auf die später genauer eingegangen wird.

Für den Umrichteranschluss gilt entsprechendes. Er kann also als einfache Sammelschiene oder aber auch als komplexe Schalteinheit mit Schaltern und dergleichen ausgestaltet sein.

In dem ersten Verbindungszweig 13 sind ein erster dreipoliger Netzschalter 15 und ein erster dreipoliger Umrichterschalter 16 angeordnet. Der erste Netzschalter 15 ist zwischen dem ersten Transformator 7 und dem Netzanschluss angeordnet, wohingegen der erste Umrichterschalter 16 zwischen dem ersten Transformator 7 und dem Umrichteranschluss angeordnet ist. Entsprechendes gilt für den zweiten Verbindungszweig 14, in dem ein zweiter Netzschalter 17 sowie ein zweiter Umrichterschalter 18 angeordnet sind. Der zweite Netzschalter 17 ist zwischen dem Netzanschluss und dem zweiten Transformator 8 und der zweite Umrichterschalter 18 ist zwischen dem zweiten Transformator 8 und dem Umrichteranschluss angeordnet.

Es ist erkennbar, dass der erste Netzschalter 15 sowie der erste Umrichterschalter 16 geschlossen sind. Mit anderen Worten ist die Primärwicklung 9 des ersten Transformators 7 mit dem Wechselspannungsnetz 2 und seine Sekundärwicklung 10 mit dem Wechselspannungsanschluss des Umrichters 5 verbunden.

Zum sanften Zuschalten des zweiten Transformators 8 dient eine Zuschalteinheit 19, die einen sich zwischen den Tertiärwicklungen 11 des ersten 7 und des zweiten Transformators 8 erstreckenden Verbindungszweig 20 sowie Zusatzmittel 21 umfasst. Bei den Zusatzmitteln 21 kann es sich, wie bereits ausgeführt wurde, um einen mechanischen oder elektronischen Schalter handeln. Darüber hinaus können ohmsche oder nichtlineare Widerstände dem besagten Schalter in Reihe geschaltet sein. Auch induktive Elemente in Reihe zum Schalter oder in Reihe zum ohmschen oder nichtlinearen Widerständen sind im Rahmen der Erfindung denkbar.

Bevor nun der zweite Netzschalter 17 sowie der zweite Umrichterschalter 18 zur Inbetriebnahme des zweiten Transformators 8 geschlossen werden, wird die Tertiärwicklung 11 des ersten Transformators 7 über die Zuschalteinheit 19 mit der Tertiärwicklung 11 des zweiten Transformators 8 verbunden. In dem in Figur 2 gezeigten Ausführungsbeispiel weist die Zuschalteinheit 19 neben dem Verbindungszweig 20 einen Schalter und in Reihe hierzu einen ohmschen Widerstand auf. Durch Schließen des Schalters 21 wird daher der zweite Transformator 8 magnetisiert und gleichzeitig mit der Wechselspannung des Wechselspannungsnetzes 2 synchronisiert. Nach der Magnetisierung und Synchronisierung des zweiten Transformators 8 werden der zweite Umrichterschalter 18 und anschließend der zweite Netzschalter 17 geschlossen. Je nach Optimierungskriterium kann die Zuschaltung von Netzschalter 17 und Umrichterschalter 18 auch in umgekehrter Reihenfolge erfolgen. Der erste Transformator 7 könnte nun durch Öffnen der Schalter 15 und 16, beispielsweise für Wartungszwecke, außer Betrieb genommen werden, ohne den Energiefluss unterbrechen zu müssen.

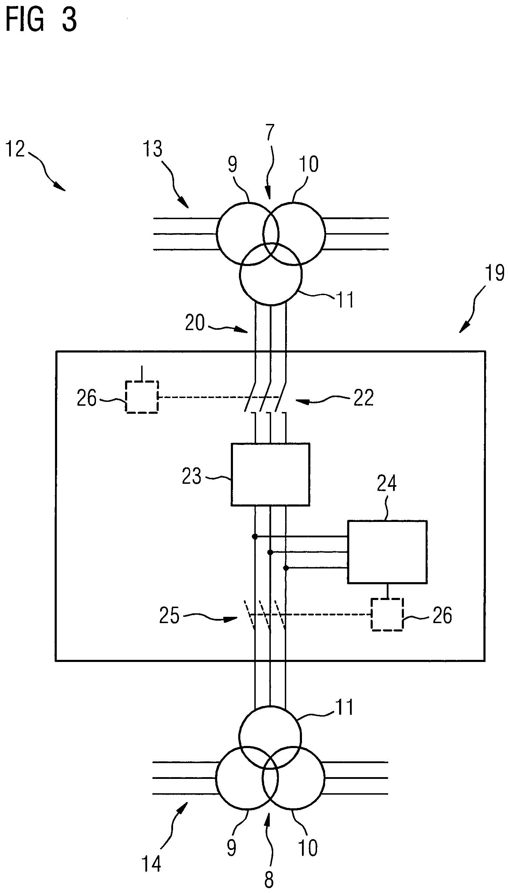

Figur 3 zeigt ein weiteres Ausführungsbeispiel der erfindungsgemäßen Vorrichtung 12, wobei ein Schalter 22 der Zuschalteinheit 19 figürlich dargestellt ist. Der Schalter 22 ist in Reihe zu einem ohmschen Widerstand 23 angeordnet. In Parallelschaltung zum Verbindungszweig 20 ist ein Umrichter 24 verdeutlicht. Dieser kann beispielsweise als 2-Punkt, 3-Punkt-Umrichter oder auch als Multilevel (M2C) Umrichter mit einer Reihenschaltung von zweipoligen Submodulen ausgestaltet sein. Mit Hilfe des Umrichters 24 ist es möglich, dem ersten oder zweiten Transformator 7,8 Magnetisierungsenergie zuzuführen. Dazu kann am Umrichter ein Energiespeicher angeschlossen werden, um Spannungsschwankungen zu reduzieren und Verluste zu decken. Der Anschluss des Energiespeichers erfolgt parallel zum Zwischenkreiskondensator, bzw. im Falle des Multilevel Umrichters parallel zum Kondensator der Submodule.

Ferner ist optional ein zweiter Schalter 25 der Zuschalteinheit 19 erkennbar, der zwischen dem ohmschen Widerstand 23 und der Tertiärwicklung 11 des zweiten Transformators 8 angeordnet ist. Der Schalter 22 und der Schalter 25 sind jeweils mit Mitteln zum phasenselektiven Schalten 26 verbunden, so dass eine phasenselektive Verbindung der Tertiärwicklungen 11 der Transformatoren 7 und 8 ermöglicht ist.

## Patentansprüche

1. Vorrichtung (12) zum Anschluss eines Umrichters (5) an ein Wechselspannungsnetz (2,3) mit einem Netzanschluss zum Verbinden mit dem Wechselspannungsnetz (2,3) und einem Umrichteranschluss zum Verbinden mit dem Umrichter (5) sowie zwei Transformatoren (7,8), wobei der Netz- und der Umrichteranschluss über die zwei parallel zueinander geschalteten Transformatoren (7,8) miteinander verbunden sind, die neben einer Primär- (9) und Sekundärwicklung (10) mit einer Tertiärwicklung (11) ausgestattet sind, wobei in Reihe zu jedem Transformator (7,8) wenigstens ein Schalter (15) angeordnet ist und wobei eine Zuschalteinheit (19) vorgesehen ist, die an eine Tertiärwicklung (11) eines der Transformatoren (7,8) angeschlossen ist,
**dadurch gekennzeichnet, dass**
die Zuschalteinheit (19) auch an die Tertiärwicklung des anderen Transformators (8) angeschlossen und zum Verbinden der Tertiärwicklungen (11) miteinander eingerichtet ist,
die Zuschalteinheit (19) wenigstens einen Leistungshalbleiterschalter aufweist, der Teil eines Umrichters (24) ist, und der Umrichter (24) mit Energiespeichern verbunden und parallel zu einem die Tertiärwicklungen (11) verbindenden Verbindungszweig (20) geschaltet ist.

2. Vorrichtung (12) nach Anspruch 1,
**dadurch gekennzeichnet, dass**
die Zuschalteinheit (19) den sich zwischen den Tertiärwicklungen (11) erstreckenden Verbindungszweig (20) aufweist, in dem ein Schalter (22) angeordnet ist.

3. Vorrichtung (12) nach Anspruch 2,
**dadurch gekennzeichnet, dass**
der Schalter ein mechanischer Schalter (22) ist.

4. Vorrichtung (12) nach Anspruch 2 oder 3,
**dadurch gekennzeichnet, dass**
in Reihe zum Schalter (22) wenigstens ein Widerstand (23) angeordnet ist.

5. Vorrichtung (12) nach Anspruch 4,
**dadurch gekennzeichnet, dass**
der Widerstand (23) ein nichtlinearer Widerstand ist.

6. Vorrichtung (12) nach einem der Ansprüche 1 bis 5,
**dadurch gekennzeichnet, dass**
die Zuschalteinheit (19) ein induktives Element aufweist.

7. Vorrichtung (12) nach einem der vorhergehenden Ansprüche,
**dadurch gekennzeichnet, dass** zwischen dem Netzanschluss und jedem Transformator (7,8) Netzschalter (15,17) und zwischen dem Umrichteranschluss und jedem Transformator (7,8) Umrichterschalter (16,18) angeordnet sind.

8. Vorrichtung (12) nach einem der Ansprüche 2 bis 7,
**dadurch gekennzeichnet, dass**
die Zuschalteinheit (19) Mittel zum phasenselektiven Schalten (26) aufweist.

9. Hochspannungsanlage (1) mit einer Vorrichtung (12) gemäß den Ansprüchen 1 bis 8 und einem Umrichter (5), der einen Gleich- und einen Wechselspannungsanschluss aufweist, wobei der Wechselspannungsanschluss mit der Vorrichtung (12) gemäß den Ansprüchen 1 bis 8 verbunden ist.

10. Verfahren zum Zuschalten eines nicht magnetisierten zweiten Transformators (8) in Parallelschaltung zu einem sich in Betrieb befindlichen magnetisierten ersten Transformator (7), der mit einem Wechselspannungsnetz (2) und dem Wechselspannungsanschluss eines Umrichters (5) verbunden ist, wobei jeder Transformator (7,8) neben einer Primär- (9) und einer Sekundärwicklung (10) auch eine Tertiärwicklung (11) aufweist,
**dadurch gekennzeichnet, dass**
die Tertiärwicklung (11) des zweiten Transformators (8) mit der Tertiärwicklung (11) des ersten Transformators (7) verbunden wird, vor dem Zuschalten des zweiten Transformators (8) Blindleistung über die Tertiärwicklung (11) in den zweiten Transformator (8) eingeleitet wird, und der zweite Transformator (8) erst anschließend an das Wechselspannungsnetz (2) angeschlossen wird.

11. Verfahren nach Anspruch 10,
**dadurch gekennzeichnet, dass**
das Verbinden der Tertiärwicklungen (11) und/oder das Verbinden des zweiten Transformators (8) mit dem Wechselspannungsnetz (2) phasenselektiv erfolgt.

## Claims

1. Apparatus (12) for connecting a converter (5) to an AC grid (2, 3), which apparatus has a grid connection for connecting to the AC grid (2, 3) and a converter connection for connecting to the converter (5) and also two transformers (7, 8), wherein the grid connection and the converter connection are connected to one another via the two transformers (7, 8), which are connected in parallel with one another and are equipped with a tertiary winding (11) in addition to a primary winding (9) and a secondary winding (10), at least one switch (15) being arranged in series with each transformer (7, 8), and a starter unit (19) being provided, which is connected to a tertiary winding (11) of one of the transformers (7, 8),
**characterized in that**
the starter unit (19) is also connected to the tertiary winding of the other transformer (8) and is designed to connect the tertiary windings (11) to one another, the starter unit (19) comprises at least one power semiconductor switch, which is part of a converter (24), and the converter (24) is connected to energy storage devices and is connected in parallel with a connection path (20) that connects the tertiary windings (11).

2. Apparatus (12) according to Claim 1,
**characterized in that**
the starter unit (19) comprises the connecting path (20) running between the tertiary windings (11), in which path is arranged a switch (22).

3. Apparatus (12) according to Claim 2,
**characterized in that**
the switch is a mechanical switch (22).

4. Apparatus (12) according to Claim 2 or 3,
**characterized in that**
at least one resistor (23) is arranged in series with the switch (22).

5. Apparatus (12) according to Claim 4,
**characterized in that**
the resistor (23) is a nonlinear resistor.

6. Apparatus (12) according to any of Claims 1 to 5, **characterized in that**
the starter unit (19) comprises an inductive element.

7. Apparatus (12) according to any of the preceding claims, **characterized in that**
grid switches (15, 17) are arranged between the grid connection and each transformer (7, 8), and converter switches (16, 18) are arranged between the converter connection and each transformer (7, 8).

8. Apparatus (12) according to any of Claims 2 to 7, **characterized in that**
the starter unit (19) comprises means (26) for phase-selective switching.

9. High-voltage system (1) comprising an apparatus (12) according to Claims 1 to 8 and a converter (5), which has a DC terminal and an AC terminal, which AC terminal is connected to the apparatus (12) according to Claims 1 to 8.

10. Method for starting a non-magnetized second transformer (8) connected in parallel with a magnetized first transformer (7) that is in operation and which is connected to an AC grid (2) and to the AC terminal of a converter (5), each transformer (7, 8) also comprising in addition to a primary winding (9) and a secondary winding (10) a tertiary winding (11),
**characterized in that**
the tertiary winding (11) of the second transformer (8) is connected to the tertiary winding (11) of the first transformer (7), reactive power is fed into the second transformer (8) via the tertiary winding (11) before starting the second transformer (8), and only afterwards is the second transformer (8) connected to the AC grid (2).

11. Method according to Claim 10,
**characterized in that**
the tertiary windings (11) and/or the second transformer (8) are connected to the AC grid (2) phase-selectively.

## Revendications

1. Dispositif (12) de raccordement d'un onduleur (5) à un réseau (2, 3) de tension alternative, comprenant une borne de réseau pour la liaison au réseau (2, 3) de tension alternative et une borne d'onduleur pour la liaison à l'onduleur (5), ainsi que deux transformateurs (7, 8), la borne de réseau et la borne de convertisseur étant reliées entre elles par les deux transformateurs (7, 8), qui sont montés l'un par rapport à l'autre en parallèle et qui sont équipés d'un enroulement (9) primaire et d'un enroulement (10) secondaire avec un enroulement (11) tertiaire, au moins un interrupteur (15) étant monté en série avec chaque transformateur (7, 8) et dans lequel il est prévu une unité (19) de connexion, qui est raccordée à un enroulement (11) tertiaire de l'un des transformateurs (7, 8),
**caractérisé en ce que**
l'unité (19) de connexion est raccordée aussi à l'enroulement tertiaire de l'autre transformateur (8) et est conçue pour relier les enroulements (11) tertiaires entre eux, l'unité (19) de connexion ayant au moins un interrupteur à semi-conducteur de puissance, qui fait partie d'un onduleur (24), et l'onduleur (24) est relié à des accumulateurs d'énergie et est monté en parallèle à une branche (20) de liaison reliant les enroulements (11) tertiaires.

2. Dispositif (12) suivant la revendication 1,
**caractérisé en ce que**
l'unité (19) de connexion a la branche (20) de liaison, qui s'étend entre les enroulements (11) tertiaires et dans laquelle est monté un interrupteur (22).

3. Dispositif (12) suivant la revendication 2,
**caractérisé en ce que**
l'interrupteur est un interrupteur (22) mécanique.

4. Dispositif (12) suivant la revendication 2 ou 3,
**caractérisé en ce**
**qu'**au moins une résistance (23) est montée en série avec l'interrupteur (22).

5. Dispositif (12) suivant la revendication 4,
**caractérisé en ce que**
la résistance (23) est une résistance non linéaire.

6. Dispositif (12) suivant l'une des revendications 1 à 5,
**caractérisé en ce que**
l'unité (19) de connexion a un élément inductif.

7. Dispositif (12) suivant l'une des revendications précédentes,
**caractérisé en ce**
**qu'**il est monté des interrupteurs (15, 17) de réseau entre la borne de réseau et chaque transformateur (7, 8) et des interrupteurs (16, 18) d'onduleur entre la borne d'onduleur et chaque transformateur (7, 8).

8. Dispositif (12) suivant l'une des revendications 2 à 7,
**caractérisé en ce que**
l'unité (19) de connexion a des moyens de commutation à sélection de phase.

9. Installation (1) de haute tension ayant un dispositif (12) suivant les revendications 1 à 8 et un onduleur (5), qui a une borne de tension continue et une borne de tension alternative, la borne de tension alternative étant reliée au dispositif (12) suivant les revendications 1 à 8.

10. Procédé de connexion d'un deuxième transformateur (8) magnétisé suivant un circuit en parallèle avec un premier transformateur (7) magnétisé se trouvant en fonctionnement, qui est relié à un réseau (2) de tension alternative et à la borne de tension alternative d'un onduleur (5), chaque transformateur (7, 8) ayant, outre un enroulement (9) primaire et un enroulement (10) secondaire, également un enroulement (11) tertiaire, **caractérisé en ce que** l'on relie l'enroulement (11) tertiaire du deuxième transformateur (8) à l'enroulement (11) tertiaire du premier transformateur (7), **en ce qu'**avant la connexion du deuxième transformateur (8), on envoie de la puissance réactive dans le deuxième transformateur (8) par l'intermédiaire de l'enroulement (11) tertiaire et on ne raccorde qu'ensuite le deuxième transformateur (8) au réseau (2) de tension alternative.

11. Procédé suivant la revendication 10,
**caractérisé en ce que**
la liaison des enroulements (11) tertiaires et/ou la liaison du deuxième transformateur (8) au réseau (2) de tension alternative s'effectue d'une manière sélective en phase.
